(19) **Europäisches Patentamt / European Patent Office / Office européen des brevets**

(11) **EP 4 745 006 A1**

(12) **EUROPEAN PATENT APPLICATION**
published in accordance with Art. 153(4) EPC

(43) Date of publication:
**20.05.2026 Bulletin 2026/21**

(21) Application number: **23945782.3**

(22) Date of filing: **14.07.2023**

(51) International Patent Classification (IPC):
**B62D 6/00** *(2006.01)* **B62D 5/04** *(2006.01)*

(52) Cooperative Patent Classification (CPC):
**B62D 6/003; B62D 5/04; B62D 6/00; B62D 15/025;**
B62D 6/008

(86) International application number:
**PCT/JP2023/026051**

(87) International publication number:
**WO 2025/017777 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **JTEKT CORPORATION
Kariya-shi, Aichi 448-8652 (JP)**

(72) Inventors:
• **TAMAIZUMI, Terutaka
  Kariya-shi, Aichi 448-8652 (JP)**
• **INDEN, Yuki
  Kariya-shi, Aichi 448-8652 (JP)**
• **YAMAUCHI, Izumi
  Kariya-shi, Aichi 448-8652 (JP)**

(74) Representative: **Winter, Brandl - Partnerschaft
mbB
Alois-Steinecker-Straße 22
85354 Freising (DE)**

(54) **STEERING CONTROL DEVICE**

(57)     A steering control device (50) controls a motor (21). The motor drives a steering system (10) that steers a steered wheel (12) of a vehicle. The steering control device (50) performs feedback control such that an actual angle ($\theta_p$) of a shaft (23) that rotates in conjunction with a steering operation of the steered wheel (12) follows a target rotation angle ($\theta_{p\_med}{}^*$); calculates, based on a state variable ($\theta_{p\_med}{}^*$) of the vehicle, an estimated value ($\zeta$) of a human body motion indicator representing human body motion that affects ride comfort or discomfort of a vehicle occupant; determine whether the human body motion indicator ($\zeta$) has reached a level at which it is to be suppressed, based on the estimated value ($\zeta$) of the human body motion indicator; and when it is determined that the human body motion indicator has reached the level at which it is to be suppressed, correct the target rotation angle ($\theta_{p\_med}{}^*$) such that the human body motion indicator is suppressed.

Fig.3

## Description

TECHNICAL FIELD

The present disclosure relates to steering control devices.

BACKGROUND ART

Conventionally, techniques for maintaining comfort of an occupant in vehicle motion control have been known in the art. For example, a control device described in Patent Document 1 uses a human body behavior model to simulate posture control of a seated occupant when a lateral acceleration is applied to a vehicle. In consideration of dynamic characteristics between the vehicle and the occupant obtained by the simulation, the control device performs feedforward control based on an input of the lateral acceleration in order to suppress swaying of the occupant's head. The human body behavior model is one that models human body behavior as an equivalent double inverted pendulum.

Related Art Documents

Patent Documents

Patent Document 1: Japanese Unexamined Patent Application Publication No. 2021-062821 (JP 2021-062821 A)

SUMMARY OF THE INVENTION

Problem to be Solved by the Invention

The human body behavior model has modeling error. The modeling error is an error that exists between the model and an actual object. Accordingly, when the human body behavior model is directly used for vehicle control as in Patent Document 1, the modeling error may affect control for suppressing swaying of the occupant's head. It is therefore desired to ensure more appropriate comfort for occupants.

Means for Solving the Problem

A steering control device according to one aspect of the present disclosure is configured to control a motor. The motor is configured to drive a steering system configured to steer a steered wheel of a vehicle. The steering control device includes: an angle feedback control unit configured to perform feedback control such that an actual angle of a shaft configured to rotate in conjunction with a steering operation of the steered wheel follows a target rotation angle; an estimation processing unit configured to calculate an estimated value of a human body motion indicator based on a state variable of the vehicle, the human body motion indicator representing human body motion that affects ride comfort or discomfort of an occupant of the vehicle; a determination processing unit configured to determine whether the human body motion indicator has reached a level at which the human body motion indicator is to be suppressed, based on the estimated value of the human body motion indicator calculated by the estimation processing unit; and a correction processing unit configured to, when the determination processing unit determines that the human body motion indicator has reached the level at which the human body motion indicator is to be suppressed, correct the target rotation angle such that the human body motion indicator is suppressed.

BRIEF DESCRIPTION OF THE DRAWINGS

[FIG. 1] FIG. 1 is a configuration diagram of an electric power steering system equipped with a steering control device according to an embodiment.

[FIG. 2] FIG. 2 is a block diagram of a motor and the steering control device in FIG. 1.

[FIG. 3] FIG. 3 is a block diagram of a command value calculation unit in FIG. 2.

[FIG. 4] FIG. 4 is a block diagram of a jerk suppression processing unit in FIG. 3.

MODES FOR CARRYING OUT THE INVENTION

A steering control device according to an embodiment will be described. The steering control device controls, for example, an electric power steering system (hereinafter referred to as "EPS 10") of a vehicle. The EPS 10 is a type of steering system for a vehicle.

<Configuration of EPS 10>

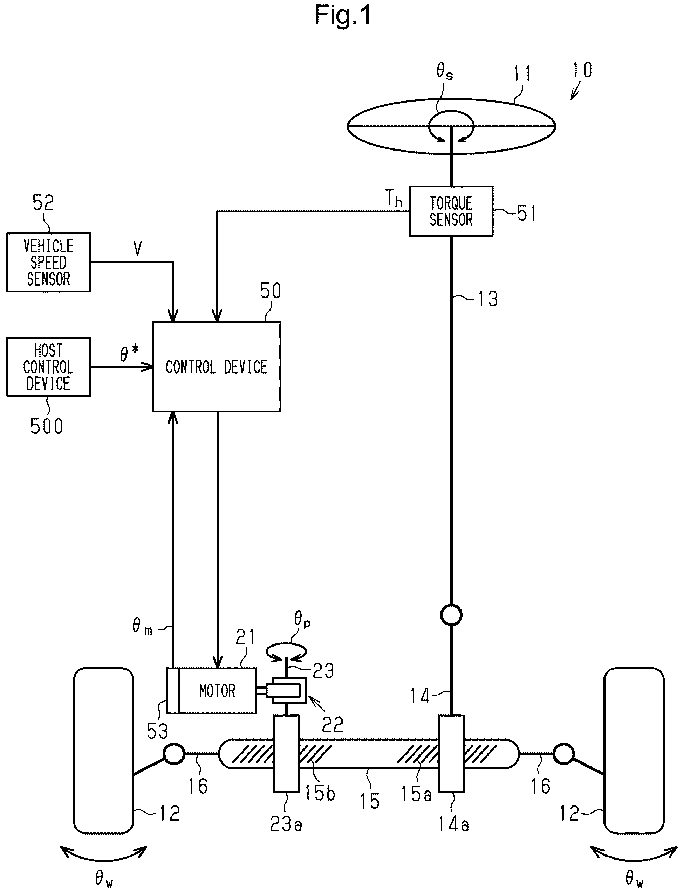

As shown in FIG. 1, in the EPS 10, a steering wheel 11 and steered wheels 12 are mechanically connected for power transmission. The EPS 10 includes a steering shaft 13, a first pinion shaft 14, and a steered shaft 15.

A first end of the steering shaft 13 is connected to the steering wheel 11. A second end of the steering shaft 13 is connected to the first pinion shaft 14. The steered shaft 15 extends in the vehicle width direction. Both ends of the steered shaft 15 are connected to the steered wheels 12 via tie rods 16. The first pinion shaft 14 is provided so as to intersect the steered shaft 15. Pinion teeth 14a of the first pinion shaft 14 mesh with first rack teeth 15a of the steered shaft 15. The steered shaft 15 moves linearly in conjunction with a rotational operation of the steering wheel 11. The linear motion of the steered shaft 15 is transmitted to the steered wheels 12 via the tie rods 16. As a result, the steered angle $\theta_w$ of the steered wheels 12 changes.

The EPS 10 includes a motor 21 and a reduction mechanism 22. The motor 21 generates an assist torque. The assist torque is a force for assisting the driver in steering the steering wheel 11, and is a force that acts in the same direction as the direction in which the driver operates the steering wheel 11. The motor 21 is, for example, a three-phase brushless motor. The motor 21 is connected to a second pinion shaft 23 via the reduction mechanism 22. Pinion teeth 23a of the second pinion shaft 23 mesh with second rack teeth 15b of the steered shaft 15. Rotation of the motor 21 is reduced by the reduction mechanism 22. The reduced rotational force of the motor 21 is transmitted, as assist torque, to the steered shaft 15 via the second pinion shaft 23. The steered shaft 15 thus moves in the vehicle width direction in accordance with the rotation of the motor 21. The second pinion shaft 23 is a shaft that rotates in conjunction with a steering operation of the steered wheels 12.

The EPS 10 includes a control device 50. The control device 50 is an example of a steering control device, and includes a processing circuit including one of the following three configurations A1, A2, and A3.

A1. One or more processors that operate in accordance with a computer program that is software. The processor includes a CPU (Central Processing Unit) and a memory.

A2. One or more dedicated hardware circuits, such as an application-specific integrated circuit (ASIC), that perform at least part of various processes.

A3. A hardware circuit configured by combining the two configurations A1, A2.

The memory is a computer-readable medium and stores programs that describe processes or instructions for the computer. In the present embodiment, the computer is a CPU. The memory includes a RAM (Random Access Memory) and a ROM (Read Only Memory). The CPU performs various types of control by executing the programs stored in the memory at a predetermined calculation cycle.

The control device 50 controls the motor 21 based on the detection results from sensors mounted on the vehicle. The sensors include a torque sensor 51, a vehicle speed sensor 52, and a rotation angle sensor 53. The torque sensor 51 detects a steering torque $T_h$ based on the amount of twist of the steering shaft 13. The steering torque $T_h$ is torque applied to the steering shaft 13 through a rotational operation of the steering wheel 11. The vehicle speed sensor 52 detects a vehicle speed V. The rotation angle sensor 53 is provided on the motor 21. The rotation angle sensor 53 detects a rotation angle $\theta_m$ of the motor 21.

The control device 50 performs vector control on the motor 21 using the rotation angle $\theta_m$ detected by the rotation angle sensor 53. The control device 50 also performs assist control. The assist control is control for supplying electric power to the motor 21 such that the motor 21 generates an assist torque corresponding to the steering torque $T_h$. The control device 50 calculates a target assist torque based on the steering torque $T_h$ detected by the torque sensor 51 and the vehicle speed V detected by the vehicle speed sensor 52. The target assist torque is a target value of the assist torque generated by the motor 21. The control device 50 controls power supply to the motor 21 such that an actual assist torque applied to the steered shaft 15 matches the target assist torque.

From the viewpoint of further improving vehicle safety or convenience, a vehicle may be equipped with a driver assistance system that implements various driver assistance functions, or an autonomous driving system that implements autonomous driving functions in which the system takes over driving. In this case, the vehicle is provided with a host control device 500 that performs supervisory control of control devices of various in-vehicle systems. The host control device 500 determines an optimal control method based on the state of the vehicle, and issues individual control commands to the in-vehicle control devices in accordance with the determined control method.

The host control device 500 intervenes in steering control performed by the control device 50. The host control device 500 selectively enables or disables the driver assistance functions or the autonomous driving functions through operation of a switch (not shown) provided at the driver's seat or the like. When the driver assistance functions or the autonomous driving functions are enabled, the host control device 500 calculates, for example, a command angle $\theta^*$ for causing the vehicle to travel on a target lane. The command angle $\theta^*$ is a target value of a pinion angle $\theta_p$ necessary to cause the vehicle to travel along a lane according to the traveling state of the vehicle. The command angle $\theta^*$ may be an additional angle to be added to a current pinion angle $\theta_p$, or may be an alternative angle to replace a current target pinion angle $\theta_p{}^*$.

<Configuration of Control Device 50>

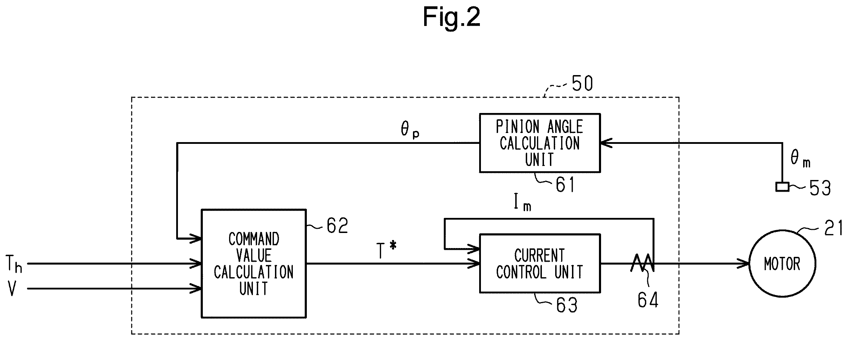

The configuration of the control device 50 will now be described in detail. As shown in FIG. 2, the control device 50 controls power supply to the motor 21. The control device 50 includes a pinion angle calculation unit 61, a command value calculation unit 62, and a current control unit 63.

The pinion angle calculation unit 61 calculates the pinion angle $\theta_p$ based on the rotation angle $\theta_m$ of the motor 21 detected by the rotation angle sensor 53. The pinion angle $\theta_p$ is the rotation angle of the second pinion shaft 23. The pinion angle calculation unit 61 calculates the pinion angle $\theta_p$ by, for example, dividing the rotation angle $\theta_m$ by the reduction ratio of the reduction mechanism 22.

The command value calculation unit 62 calculates an assist command value $T^*$ based on the steering torque $T_h$ detected by the torque sensor 51 and the vehicle speed V detected by the vehicle speed sensor 52. The assist command value T* indicates a target value of torque to be generated by the motor 21. The greater the absolute value of the steering torque $T_h$ and the lower the vehicle speed V, the greater the absolute value of the assist command value T*.

The current control unit 63 supplies electric power corresponding to the assist command value T* to the motor 21. That is, the current control unit 63 calculates a current command value based on the assist command value T*. The current command value is a target value of current to be supplied to the motor 21, and indicates the amount of current necessary for the motor 21 to generate the target assist torque.

The current control unit 63 detects current $I_m$ supplied to the motor 21 by a current sensor 64. The current sensor 64 is provided in a power supply path between the current control unit 63 and the motor 21. The current control unit 63 performs feedback control of the current $I_m$. That is, the current control unit 63 calculates the deviation between the current command value and the value of the current $I_{m1}$, and controls power supply to the motor 21 so as to eliminate the calculated deviation. The motor 21 thus generates torque corresponding to the assist command value T*.

<Configuration of Command Value Calculation Unit 62>

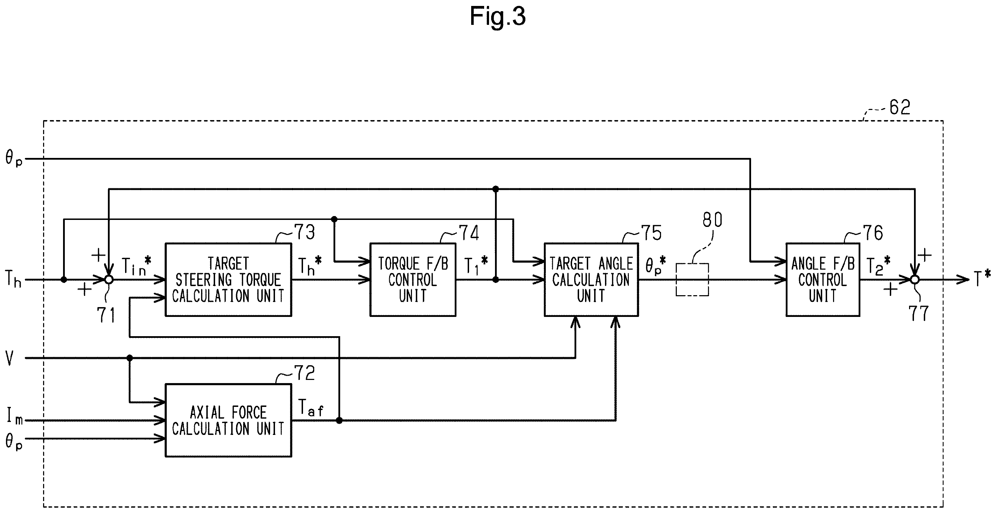

Next, the configuration of the command value calculation unit 62 will be described. As shown in FIG. 3, the command value calculation unit 62 includes a first adder 71, an axial force calculation unit 72, a target steering torque calculation unit 73, a torque feedback control unit 74, a target angle calculation unit 75, an angle feedback control unit 76, and a second adder 77.

The first adder 71 calculates an input torque $T_{in}^*$ by adding the steering torque $T_h$ detected by the torque sensor 51 and a first assist torque $T_1^*$ calculated by the torque feedback control unit 74. The input torque $T_{in}^*$ is torque applied to the steering shaft 13.

The axial force calculation unit 72 receives, for example, the vehicle speed V detected by the vehicle speed sensor 52, the current $I_{m1}$ of the motor 21 detected by the current sensor 64, and the pinion angle $\theta_p$ calculated by the pinion angle calculation unit 61. The axial force calculation unit 72 calculates an axial force acting on the steered shaft 15 based on the vehicle speed V, the current $I_m$ of the motor 21, and the pinion angle $\theta_p$, and calculates a torque conversion value $T_{af}$ by converting the calculated axial force into torque applied to the steering shaft 13.

The target steering torque calculation unit 73 receives the input torque $T_{in}^*$ calculated by the first adder 71 and the torque conversion value $T_{af}$ calculated by the axial force calculation unit 72. The target steering torque calculation unit 73 calculates a target steering torque $T_h^*$ based on the input torque $T_{in}^*$ and the torque conversion value $T_{af}$. The target steering torque $T_h^*$ is a target value of the steering torque $T_h$ applied to the steering wheel 11. The greater the absolute value of the input torque $T_{in}^*$, the greater the absolute value of the target steering torque $T_h^*$.

The torque feedback control unit 74 receives the steering torque $T_h$ detected by the torque sensor 51 and the target steering torque $T_h^*$ calculated by the target steering torque calculation unit 73. The torque feedback control unit 74 calculates the first assist torque $T_1^*$ by performing feedback control of the steering torque $T_h$ such that the steering torque $T_h$ detected by the torque sensor 51 follows the target steering torque $T_h^*$.

The target angle calculation unit 75 receives the vehicle speed V detected by the vehicle speed sensor 52, the steering torque $T_h$ detected by the torque sensor 51, the torque conversion value $T_{af}$ calculated by the axial force calculation unit 72, and the first assist torque $T_1^*$ calculated by the torque feedback control unit 74. The target angle calculation unit 75 calculates a target pinion angle $\theta_p^*$ based on the vehicle speed V, the steering torque $T_h$, the torque conversion value $T_{af}$, and the first assist torque $T_1^*$. The target pinion angle $\theta_p^*$ is a target value of the rotation angle of the pinion shaft 23.

The target angle calculation unit 75 calculates the target pinion angle $\theta_p^*$ using, for example, a model expressed by the following equation (A). The model is one that models an ideal pinion angle $\theta_p$ when torque corresponding to the first assist torque $T_1^*$ is applied to the steering shaft 13.

$$T_1^* = J \cdot \theta_p^{*\prime\prime} + C \cdot \theta_p^{*\prime} + K \cdot \theta_p^* \ldots (A)$$

"J" is an inertia coefficient that models a moment of inertia of the EPS 10. "C" is a viscous coefficient that models friction etc. of the EPS 10. "K" is a spring coefficient that models, as a spring, specifications such as the suspension and wheel alignment of a vehicle on which the EPS 10 is mounted. The inertia coefficient J, the viscous coefficient C, and the spring coefficient K take values corresponding to the vehicle speed V detected by the vehicle speed sensor 52. "$\theta_p^{*\prime\prime}$" is a second time derivative of the target pinion angle $\theta_p^*$, and "$\theta_p^{*\prime}$" is a first time derivative of the target pinion angle $\theta_p^*$. The symbol "·" in the equation (A) indicates multiplication.

The angle feedback control unit 76 receives the target pinion angle $\theta_p^*$ calculated by the target angle calculation unit 75 and the pinion angle $\theta_p$ calculated by the pinion angle calculation unit 61. The angle feedback control unit 76 calculates a second assist torque $T_2^*$ by performing feedback control of the pinion angle $\theta_p$ such that the pinion angle $\theta_p$ calculated by the pinion angle calculation unit 61 follows the target pinion angle $\theta_p^*$.

The second adder 77 calculates an assist command value T* by adding the first assist torque $T_1^*$ calculated by the torque feedback control unit 74 and the second assist torque $T_2^*$ calculated by the angle feedback control unit 76. The motor 21 generates torque corresponding to the assist command value $T_*$ when current corresponding to the assist command value $T^*$ is supplied to the motor 21.

<Regarding Swaying of Occupant's Head>

Steering of the steering wheel 11 by the driver or steering intervention by the host control device 500 may increase jerk of an occupant's head. Jerk is the rate of change of acceleration with respect to time, that is, the time derivative of acceleration. Jerk is one of indicators representing human body motion that affects ride comfort or discomfort of a vehicle occupant. In the following description, an indicator of human body movement is referred to as a human body motion indicator. For example, when a vehicle travels on a curved road, the occupant's head or upper body may be swung by centrifugal force, so that the head moves greatly in a lateral direction. The lateral direction is leftward or rightward with respect to the direction of travel of the vehicle. Therefore, jerk due to lateral motion of the head tends to increase. When jerk due to lateral motion of the head is large, the occupant may feel discomfort. Accordingly, in the present embodiment, the following configuration is adopted as the command value calculation unit 62.

<Jerk Suppression Processing>

As shown in FIG. 3, the command value calculation unit 62 includes a jerk suppression processing unit 80. The jerk suppression processing unit 80 is provided in the calculation path between the target angle calculation unit 75 and the angle feedback control unit 76 in the command value calculation unit 62.

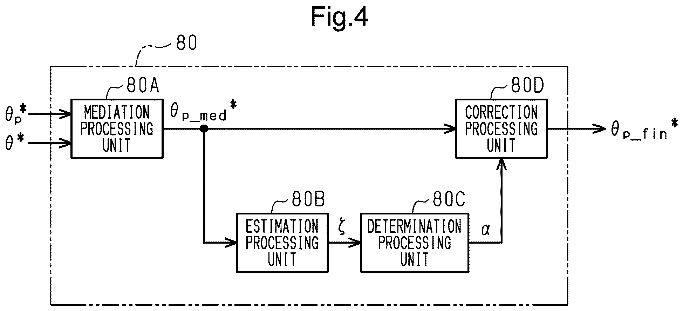

As shown in FIG. 4, the jerk suppression processing unit 80 includes a mediation processing unit 80A, an estimation processing unit 80B, a determination processing unit 80C, and a correction processing unit 80D. The mediation processing unit 80A receives the target pinion angle $\theta_p^*$ calculated by the target angle calculation unit 75 and the command angle $\theta^*$ calculated by the host control device 500. The mediation processing unit 80A mediates between the received target pinion angle $\theta_p^*$ and command angle $\theta^*$. When the command angle $\theta^*$ is an additional angle to be added to a current pinion angle $\theta_p$, the mediation processing unit 80A calculates a mediated target pinion angle $\theta_{p\_med}^*$ by adding the command angle $\theta^*$ to a current target pinion angle $\theta_p^*$. When the command angle $\theta^*$ is an alternative angle that replaces the current pinion angle $\theta_p$, the mediation processing unit 80A sets the command angle $\theta^*$ as the mediated target pinion angle $\theta_{p\_med}^*$. When the driver assistance functions or the autonomous driving functions are disabled, that is, when the host control device 500 does not calculate the command angle $\theta^*$, the mediation processing unit 80A sets the current pinion angle $\theta_p$ as the mediated target pinion angle $\theta_{p\_med}^*$.

The estimation processing unit 80B receives the mediated target pinion angle $\theta_{p\_med}^*$ calculated by the mediation processing unit 80A. The target pinion angle $\theta_{p\_med}^*$ is one of state variables of the vehicle. The estimation processing unit 80B calculates an estimated jerk value $\zeta$ based on the mediated target pinion angle $\theta_{p\_med}^*$, using a human body behavior model. The estimated jerk value $\zeta$ is an estimated value of jerk due to lateral motion of the occupant's head corresponding to the mediated target pinion angle $\theta_{p\_med}^*$. The human body behavior model is, for example, one that models the behavior of an occupant seated in a vehicle seat as an equivalent double inverted pendulum.

The determination processing unit 80C receives the estimated jerk value $\zeta$ calculated by the estimation processing unit 80B. The determination processing unit 80C determines, based on the estimated jerk value $\zeta$, whether jerk due to lateral motion of the occupant's head has reached a level at which the jerk is to be suppressed. The determination processing unit 80C compares the estimated jerk value $\zeta$ with a threshold. The threshold is set based on jerk considered likely to cause discomfort to the occupant.

When the estimated jerk value $\zeta$ is less than the threshold, the determination processing unit 80C determines that jerk has not reached the level at which it is to be suppressed. When the estimated jerk value $\zeta$ is greater than or equal to the threshold, the determination processing unit 80C determines that jerk has reached the level at which it is to be suppressed. The determination processing unit 80C selectively enables or disables a filter function of the correction processing unit 80D according to the determination result as to whether jerk has reached the level at which it is to be suppressed.

For example, the determination processing unit 80C the determination processing unit 80C sets a coefficient $\alpha$ for the correction processing unit 80D according to the determination result as to whether jerk has reached the level at which it is to be suppressed. When it is determined that jerk has not reached the level at which it is to be suppressed, the determination processing unit 80C sets the coefficient $\alpha$ to "0." When it is determined that jerk has reached the level at which it is to be suppressed, the determination processing unit 80C sets the coefficient $\alpha$ to "1."

The correction processing unit 80D receives the mediated target pinion angle $\theta_{p\_med}^*$ calculated by the mediation processing unit 80A and the coefficient $\alpha$ set by the determination processing unit 80C. The correction processing unit 80D corrects the mediated target pinion angle $\theta_{p\_med}^*$ from the viewpoint of suppressing jerk due to lateral motion of the occupant's head. The correction processing unit 80D includes a filter for signal processing. The correction processing unit 80D filters the mediated target pinion angle $\theta_{p\_med}^*$. The filtering is a process of removing frequency components considered likely to cause swaying of the occupant's head from the mediated target pinion angle $\theta_{p\_med}^*$.

The correction processing unit 80D selectively enables or disables the filter function based on the coefficient $\alpha$. That is, the correction processing unit 80D determines a final target pinion angle $\theta_{p\_fin}{}^*$ based on the following equation (1). The final target pinion angle $\theta_{p\_fin}{}^*$ is a final target pinion angle used in feedback control of the pinion angle $\theta_p$.

$$\theta_{p\_fin}{}^* = \theta_{p\_med}{}^* \cdot (1 - \alpha) + \theta_{p\_fil}{}^* \cdot \alpha \ \ldots \ (1)$$

Here, "$\theta_{p\_fil}{}^*$" is a corrected target pinion angle obtained by filtering the mediated target pinion angle $\theta_{p\_med}{}^*$. The symbol "$\cdot$" in the equation (1) indicates multiplication.

When the coefficient $\alpha$ is "0," that is, when jerk has not reached the level at which it is to be suppressed, the correction processing unit 80D sets the mediated target pinion angle $\theta_{p\_med}{}^*$ as the final target pinion angle $\theta_{p\_fin}{}^*$. Using the filtered target pinion angle $\theta_{p\_fil}{}^*$ at a weighting ratio of 0% corresponds to disabling the filter function.

When the coefficient $\alpha$ is "1," that is, when jerk has reached the level at which it is to be suppressed, the correction processing unit 80D sets the filtered target pinion angle $\theta_{p\_fil}{}^*$ as the final target pinion angle $\theta_{p\_fin}{}^*$. Using the filtered target pinion angle $\theta_{p\_fil}{}^*$ at a weighting ratio of 100% corresponds to enabling the filter function.

The angle feedback control unit 76 performs feedback control of the pinion angle $\theta_p$ using the final target pinion angle $\theta_{p\_fin}{}^*$.

<Effects of Embodiment>

The present embodiment has the following effects.

(1) When the determination processing unit 80C determines that a human body motion indicator that affects ride comfort or discomfort of a vehicle occupant has reached a level at which the human body motion indicator is to be suppressed, the correction processing unit 80D calculates the final target pinion angle $\theta_{p\_fin}{}^*$ by correcting the mediated target pinion angle $\theta_{p\_med}{}^*$ such that the human body motion indicator is suppressed. Accordingly, by performing feedback control of the pinion angle $\theta_p$ based on the final target pinion angle $\theta_{p\_fin}{}^*$, the human body motion indicator that affects ride comfort or discomfort of a vehicle occupant is suppressed. Discomfort of the occupant is thus alleviated. Accordingly, more appropriate comfort can be ensured for the occupant. Vehicle ride comfort is also ensured.

(2) The human body motion indicator is, for example, jerk due to lateral motion of the head of a vehicle occupant. Jerk is one of human body motion indicators that affect ride comfort or discomfort of a vehicle occupant. By suppressing jerk due to lateral motion of the head of the vehicle occupant, discomfort of the occupant is alleviated, and more appropriate comfort can be ensured for the occupant.

(3) The estimation processing unit 80C calculates, based on a state variable of the vehicle, an estimated value of the human body motion indicator that affects ride comfort or discomfort of a vehicle occupant. The state variable is the mediated target pinion angle $\theta_{p\_med}{}^*$, and the estimated value of the human body motion indicator is the estimated jerk value $\zeta$. Jerk due to lateral motion of the occupant's head is affected by turning motion of the vehicle. Therefore, it is preferable to calculate the estimated jerk value $\zeta$ based on the mediated target pinion angle $\theta_{p\_med}{}^*$.

(4) The correction processing unit 80D calculates the final target pinion angle $\theta_{p\_fin}{}^*$ by filtering the mediated target pinion angle $\theta_{p\_med}{}^*$. The filtering is a process of removing frequency components considered likely to cause swaying of the occupant's head from the mediated target pinion angle $\theta_{p\_med}{}^*$. By performing feedback control of the pinion angle $\theta_p$ based on the final target pinion angle $\theta_{p\_fin}{}^*$ obtained by removing the frequency components likely to cause swaying of the occupant's head, jerk due to lateral motion of the occupant's head is appropriately suppressed.

(5) The estimation processing unit 80B calculates an estimated value of the human body motion indicator using a human body behavior model that models the behavior of an occupant seated in a vehicle seat. The estimated value of the human body motion indicator is, for example, the estimated jerk value $\zeta$. By using the human body behavior model, the estimated value of the human body motion indicator can be easily obtained.

(6) The human body behavior model is used to calculate the estimated value of the human body motion indicator that is used to determine whether the human body motion indicator that affects ride comfort or discomfort of a vehicle occupant has reached the level at which the human body motion indicator is to be suppressed. The human body motion indicator is jerk due to lateral motion of the occupant's head, and the estimated value of the human body motion indicator is the estimated jerk value $\zeta$. Therefore, unlike the case where the human body behavior model is directly used for steering control, the modeling error does not affect the process of suppressing the human body motion indicator that affects ride comfort or discomfort of a vehicle occupant.

(7) When the determination processing unit 80C determines that the human body motion indicator has not reached the level at which it is to be suppressed, the correction processing unit 80D does not filter the mediated target pinion angle $\theta_{p\_med}{}^*$. That is, the correction processing unit 80D disables the filter function. When the determination processing unit 80C determines that the human body motion indicator has reached the level at which it is to be suppressed, the correction processing unit 80D filters the mediated target pinion angle $\theta_{p\_med}{}^*$. That is, the correction processing unit 80D enables the filter function. Accordingly, when the human body motion indicator has not reached the level at which it is to be suppressed, the original feedback control of the pinion angle $\theta_p$, namely the feedback control based on the mediated target pinion angle $\theta_{p\_med}{}^*$, can be performed. When the human body motion indicator has reached the level at which it is to be suppressed, the mediated target pinion angle $\theta_{p\_med}{}^*$ can be corrected to prioritize ride comfort, such that the human body motion indicator that affects ride comfort or discomfort of a vehicle occupant is suppressed.

<Other Embodiments>

The embodiment may be modified as follows.

- The correction processing unit 80D may smoothly interpolate the mediated target pinion angle $\theta_{p\_med}{}^*$ before and after correction when switching between a state in which correction of the mediated target pinion angle $\theta_{p\_med}{}^*$ is performed and a state in which correction of the mediated target pinion angle $\theta_{p\_med}{}^*$ is not performed. The state in which correction of the mediated target pinion angle $\theta_{p\_med}{}^*$ is performed is a state in which the filter function is enabled, and the state in which correction of the mediated target pinion angle $\theta_{p\_med}{}^*$ is not performed is a state in which the filter function is disabled. By interpolating the mediated target pinion angle $\theta_{p\_med}{}^*$ before and after correction, discontinuous changes of the final target pinion angle $\theta_{p\_fin}{}^*$ are smoothed. Abrupt changes in the final target pinion angle $\theta_{p\_fin}{}^*$ when the filter function is switched between the enabled state and the disabled state are thus suppressed.

- The determination processing unit 80C may be configured to set the coefficient $\alpha$ within the range from "0 (0%)" to "1 (100%)" in increments of, for example, "0.1." When the determination processing unit 80C switches the filter function of the correction processing unit 80D from the disabled state to the enabled state, it instantaneously switches the coefficient $\alpha$ from "0" to "1." Therefore, when the estimated jerk value $\zeta$ increases to or above the threshold, the filter function of the correction processing unit 80D can be immediately enabled. That is, when the correction processing unit 80D transitions from the state in which correction of the mediated target pinion angle $\theta_{p\_med}{}^*$ is not performed to the state in which correction of the mediated target pinion angle $\theta_{p\_med}{}^*$ is performed, it immediately switches the final target pinion angle $\theta_{p\_fin}{}^*$ from the mediated target pinion angle $\theta_{p\_med}{}^*$ before correction to the target pinion

angle $\theta_{p\_fil}{}^*$ after correction after correction.

On the other hand, when the determination processing unit 80C switches the filter function of the correction processing unit 80D from the enabled state to the disabled state, it gradually changes the coefficient $\alpha$ from "1" to "0" in increments of "0.1." The weighting ratio of the filtered target pinion angle $\theta_{p\_fil}{}^*$ to the final target pinion angle $\theta_{p\_fin}{}^*$ gradually decreases from "100%" to "0%." That is, when the correction processing unit 80D transitions from the state in which correction of the mediated target pinion angle $\theta_{p\_med}{}^*$ is performed to the state in which correction of the mediated target pinion angle $\theta_{p\_med}{}^*$ is not performed, it gradually switches the final target pinion angle $\theta_{p\_fin}{}^*$ from the target pinion angle $\theta_{p\_fil}{}^*$ after correction to the mediated target pinion angle $\theta_{p\_med}{}^*$ before correction.

Accordingly, it is possible to suppress a sense of discomfort that is felt when the final target pinion angle $\theta_{p\_fin}{}^*$ is switched from the filtered target pinion angle $\theta_{p\_fil}{}^*$ to the mediated target pinion angle $\theta_{p\_med}{}^*$. The coefficient $\alpha$ indicates the degree to which the filtered target pinion angle $\theta_{p\_fil}{}^*$ is reflected in the final target pinion angle $\theta_{p\_fin}{}^*$.

- The occupant's behavior in response to vehicle motion differs depending on the seat in which the occupant is seated. Therefore, a plurality of human body behavior models may be constructed according to the seat positions. The seats include, for example, a driver's seat, a front passenger seat, a right rear seat, and a left rear seat. In this case, the estimation processing unit 80B calculates estimated jerk values $\zeta$ for the heads of the occupants seated in the respective seat positions by using the plurality of human body behavior models. The determination processing unit 80C determines whether jerk due to lateral motion of the occupants' heads has reached the level at which the jerk is to be suppressed, based on the largest one of the estimated jerk values $\zeta$ calculated using the plurality of human body behavior models. In this way, jerk of the occupant's head can be appropriately suppressed regardless of the seat in which the occupant is seated.

- The human body behavior model is not limited to a model that outputs an estimated jerk value $\zeta$ of the occupant's head, but may be any human body behavior model that outputs a human body motion indicator that affects ride comfort or discomfort of a vehicle occupant in accordance with an input state variable of the vehicle. The determination processing unit 80C determines, based on the human body motion indicator, whether jerk of the occupant's head has reached the level at which it is to be suppressed. Even in this case, the same effects as those in (1) to (7) of the embodiment can be obtained.

- Although the correction processing unit 80D selectively enables or disables the filter function by switching its output, namely the final target pinion angle $\theta_{p\_fin}^{*}$, between the mediated target pinion angle $\theta_{p\_med}^{*}$ and the filtered target pinion angle $\theta_{p\_fil}^{*}$, the following configuration may be adopted. That is, the correction processing unit 80D selectively enables or disables the filter function without using the above equation (1). The correction processing unit 80D switches filter coefficients according to the determination result from the determination processing unit 80C as to whether jerk has reached the level at which it is to be suppressed. The filter coefficients are, for example, a coefficient sequence that is a collection of a plurality of coefficients. The frequency characteristic of the filter is determined by the filter coefficients.

The filter coefficients include a first coefficient sequence and a second coefficient sequence. The first coefficient sequence is a coefficient sequence during normal operation in which the process of removing frequency components considered likely to cause swaying of the occupant's head from the mediated target pinion angle $\theta_{p\_med}^{*}$ is not performed. The second coefficient sequence is a coefficient sequence during correction in which the process of removing frequency components considered likely to cause swaying of the occupant's head from the mediated target pinion angle $\theta_{p\_med}^{*}$ is performed.

When the coefficient $\alpha$ is "0," that is, when jerk has not reached the level at which it is to be suppressed, the correction processing unit 80D switches the filter coefficients to the first coefficient sequence. Switching the filter coefficients to the first coefficient sequence corresponds to disabling the filter function. When the coefficient $\alpha$ is "1," that is, when jerk has reached the level at which it is to be suppressed, the correction processing unit 80D switches the filter coefficients to the second coefficient sequence. Switching the filter coefficients to the second coefficient sequence corresponds to enabling the filter function. Even in this case, the same effects as those in (1) to (7) of the embodiment can be obtained.

- The correction processing unit 80D may disable the function of suppressing jerk of the occupant's head, based on a command from the host control device 500. The host control device 500 generates a disable command to invalidate the determination result from the determination processing unit 80, according to the traveling state of the vehicle. The determination result that is invalidated is the determination result that jerk has reached the level at which it is to be suppressed.

For example, the host control device 500 generates the disable command when there is a possibility that the vehicle will collide with an obstacle present in the direction of travel of the vehicle. This is to prioritize execution of emergency avoidance control for avoiding a collision between the vehicle and the obstacle over suppression of jerk of the occupant's head. When there is a possibility of a collision between the vehicle and an obstacle, the host control device 500 calculates a command angle $\theta^{*}$ for moving the vehicle in a direction without an obstacle.

Regardless of the estimated value of the human body motion indicator that affects ride comfort or discomfort of a vehicle occupant, the determination processing unit 80 determines that the human body motion indicator has not reached the level at which it is to be suppressed. Specifically, when the disable command is received, the determination processing unit 80C sets the coefficient $\alpha$ to "0" regardless of the estimated jerk value $\zeta$. Therefore, regardless of the estimated jerk value $\zeta$, feedback control of the pinion angle $\theta_p$ is performed based on the final target pinion angle $\theta_{p\_fin}^{*}$ reflecting the command angle $\theta^{*}$ for emergency avoidance. Thus, a collision between the vehicle and the obstacle can be appropriately avoided.

- The determination processing unit 80C may generate a request signal that requests the host control device 500 to correct the vehicle trajectory, when it is determined that jerk of the occupant's head has reached the level at which it is to be suppressed. The request signal includes, for example, a human body motion indicator such as the estimated jerk value $\zeta$. The host control device 500 calculates, based on the human body motion indicator included in a command from the determination processing unit 80C, a vehicle trajectory such that jerk of the occupant's head is suppressed, and calculates the command angle $\theta^{*}$ for causing the vehicle to travel along the calculated trajectory. In this case, the host control device 500 may receive the final target pinion angle $\theta_{p\_fin}^{*}$ corrected by the correction processing unit 80D and calculate the trajectory in consideration of the characteristics of the received target pinion angle $\theta_p^{*}$. By feedback control of the pinion angle $\theta_p$ based on the final target pinion angle $\theta_{p\_fin}^{*}$ reflecting the command angle $\theta^{*}$, the vehicle travels along the trajectory calculated by the host control device 500. As a result, jerk of the occupant's head can be suppressed.

- The determination processing unit 80B may calculate the estimated jerk value $\zeta$ by using the human body behavior model based on, for example, the acceleration of the vehicle. Acceleration is one of the state variables of the vehicle. The estimated jerk value $\zeta$ is an estimated value of jerk due to motion of the occupant's head in the front-rear direction in accordance with the acceleration of the vehicle. The acceleration is obtained by differentiating the vehicle speed V detected by the vehicle speed sensor 52 with respect to time. The filter coefficients are set to appropriate values.

- The estimation processing unit 80B may calculate an estimated value of the human body motion indicator that affects ride comfort or discomfort of a vehicle occupant without using the human body behavior model. For example, the vehicle is equipped with a camera that captures the human body behavior of an occupant. The camera generates captured data of the human body behavior. The estimation processing unit 80B receives the captured data generated by the camera and calculates, based on the received captured data, an estimated value of the human body motion indicator that affects ride comfort or discomfort of a vehicle occupant. The human body motion indicator includes jerk of the occupant's head. The determination processing unit 80C may determine whether the human body motion indicator has reached the level at which it is to be suppressed, based on the estimated value of the human body motion indicator calculated by the estimation processing unit 80B. The determination processing unit 80C sets the coefficient $\alpha$ for the correction processing unit 80D according to the determination result as to whether the human body motion indicator has reached the level at which it is to be suppressed. The filter coefficients are set to appropriate values according to the human body motion indicator to be suppressed.

- The control device 50 may be applied to a steer-by-wire steering system. In this steering system, the steering wheel 11 and the steered wheels 12 are not mechanically connected for power transmission. In this case, the motor 21 functions as, for example, a steering motor that generates a steering force. The steering force is a force for steering the steered wheels 12.

**Claims**

1. A steering control device configured to control a motor, the motor being configured to drive a steering system configured to steer a steered wheel of a vehicle, the steering control device comprising:

   an angle feedback control unit configured to perform feedback control such that an actual angle of a shaft configured to rotate in conjunction with a steering operation of the steered wheel follows a target rotation angle;
   an estimation processing unit configured to calculate an estimated value of a human body motion indicator based on a state variable of the vehicle, the human body motion indicator representing human body motion that affects ride comfort or discomfort of an occupant of the vehicle;
   a determination processing unit configured to determine whether the human body motion indicator has reached a level at which the human body motion indicator is to be suppressed, based on the estimated value of the human body motion indicator calculated by the estimation processing unit; and
   a correction processing unit configured to, when the determination processing unit determines that the human body motion indicator has reached the level at which the human body motion indicator is to be suppressed, correct the target rotation angle such that the human body motion indicator is suppressed.

2. The steering control device according to claim 1, wherein the estimation processing unit is configured to calculate the estimated value of the human body motion indicator using a human body behavior model that models behavior of an occupant seated in a seat of the vehicle.

3. The steering control device according to claim 2, wherein:

   the human body behavior model includes a plurality of human body behavior models provided according to positions of the seats of the vehicle;
   the estimated value of the human body motion indicator includes a plurality of estimated values of the human body motion indicator calculated using the plurality of human body behavior models; and
   the determination processing unit is configured to determine whether the human body motion indicator has reached the level at which the human body motion indicator is to be suppressed, based on a largest one of the plurality of estimated values of the human body motion indicator.

4. The steering control device according to any one of claims 1 to 3, wherein the human body motion indicator is jerk due to lateral motion of a head of the occupant of the vehicle.

5. The steering control device according to any one of claims 1 to 3, wherein the state variable is the target rotation angle of the shaft.

6. The steering control device according to any one of claims 1 to 3, wherein the correction processing unit is configured to correct the target rotation angle by performing filtering on the target rotation angle.

7. The steering control device according to claim 6, wherein the correction processing unit is configured not to perform the filtering when the determination processing unit determines that the human body motion indicator has not reached the level at which the human body motion indicator is to be suppressed, and is configured to perform the filtering when the determination processing unit determines that the human body motion indicator has reached the level at which the human body motion indicator is to be suppressed.

8. The steering control device according to claim 6, wherein the correction processing unit is configured to switch, in accordance with a determination result from the determination processing unit, filter coefficients of the filtering between a first coefficient sequence used when the filtering is not performed and a second coefficient sequence used when the filtering is performed.

9. The steering control device according to any one of claims 1 to 3, wherein the correction processing unit is configured to smoothly interpolate the target rotation angle before and after correction when switching between a state in which correction of the target rotation angle is performed and a state in which correction of the target rotation angle is not performed.

10. The steering control device according to any one of claims 1 to 3, wherein the correction processing unit is configured to, when the correction processing unit transitions from a state in which correction of the target rotation angle is not performed to a state in which correction of the target rotation angle is performed, immediately switch the target rotation angle from the target rotation angle before correction to the target rotation angle after correction, and when the correction processing unit transitions from the state in which correction of the target rotation angle is performed to the state in which correction of the target rotation angle is not performed, gradually switch the target rotation angle from the target rotation angle after correction to the target rotation angle before correction.

11. The steering control device according to any one of claims 1 to 3, wherein the determination processing unit is configured to, when a disable command is received from an in-vehicle host control device, determine that the human body motion indicator has not reached the level at which the human body motion indicator is to be suppressed, regardless of the estimated value of the human body motion indicator.

# Fig.1

Fig.2

EP 4 745 006 A1

Fig.3

## Fig.4

## INTERNATIONAL SEARCH REPORT

| International application No. |
| --- |
| **PCT/JP2023/026051** |

| A. | CLASSIFICATION OF SUBJECT MATTER |
| --- | --- |

*B62D 6/00*(2006.01)i; *B62D 5/04*(2006.01)i
FI:  B62D6/00; B62D5/04

According to International Patent Classification (IPC) or to both national classification and IPC

| B. | FIELDS SEARCHED |
| --- | --- |

Minimum documentation searched (classification system followed by classification symbols)

B62D6/00; B62D5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2006-218880 A (TOYOTA JIDOSHA KABUSHIKI KAISHA) 24 August 2006 (2006-08-24) | 1-11 |
| A | WO 2010/109676 A1 (TOYOTA JIDOSHA KABUSHIKI KAISHA) 30 September 2010 (2010-09-30) | 1-11 |
| A | JP 2019-006288 A (MAZDA MOTOR CORPORATION) 17 January 2019 (2019-01-17) | 1-11 |
| A | JP 07-179140 A (NISSAN MOTOR CO., LTD.) 18 July 1995 (1995-07-18) | 1-11 |
| A | JP 2015-217707 A (KABUSHIKI KAISHA TOYOTA CHUO KENKYUSHO) 07 December 2015 (2015-12-07) | 1-11 |
| A | JP 2015-042528 A (JTEKT CORP.) 05 March 2015 (2015-03-05) | 1-11 |
| A | JP 2020-185920 A (JTEKT CORP.) 19 November 2020 (2020-11-19) | 1-11 |
| A | US 2013/0218414 A1 (AUDI AG.) 22 August 2013 (2013-08-22) | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 September 2023** | **03 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/026051**

| Patent document cited in search report | | | Publication date (day/month/year) | Patent family member(s) | | | Publication date (day/month/year) |
|---|---|---|---|---|---|---|---|
| JP | 2006-218880 | A | 24 August 2006 | (Family: none) | | | |
| WO | 2010/109676 | A1 | 30 September 2010 | CN | 102105340 | A | |
| | | | | US | 2010/0250068 | A1 | |
| JP | 2019-006288 | A | 17 January 2019 | (Family: none) | | | |
| JP | 07-179140 | A | 18 July 1995 | (Family: none) | | | |
| JP | 2015-217707 | A | 07 December 2015 | (Family: none) | | | |
| JP | 2015-042528 | A | 05 March 2015 | EP | 2842839 | A2 | |
| | | | | CN | 104417612 | A | |
| | | | | US | 2015/0057890 | A1 | |
| JP | 2020-185920 | A | 19 November 2020 | (Family: none) | | | |
| US | 2013/0218414 | A1 | 22 August 2013 | DE | 102010046317 | A1 | |
| | | | | EP | 2619021 | A1 | |
| | | | | WO | 2012/038082 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021062821 A